# EUROPÄISCHE PATENTSCHRIFT

(11) **EP 1 923 149 B1**
(45) Veröffentlichungstag und Bekanntmachung des Hinweises auf die Patenterteilung: **08.09.2010**
(21) Anmeldenummer: 07021956.3
(22) Anmeldetag: 13.11.2007
(51) Int. Cl.: B08B 15/04, B23Q 11/00, B24B 55/10, B25D 17/20

(54) **Absaugeinrichtung für ein motorisch angetriebenes Handwerkzeuggerät**
Suction device for a powered hand tool
Dispositif d'aspiration pour un outil manuel motorisé

(30) Priorität: 17.11.2006 DE 202006017585 U
(43) Veröffentlichungstag der Anmeldung: 21.05.2008
(73) Patentinhaber: Metabowerke GmbH, 72622 Nürtingen (DE)
(72) Erfinder: Kukla, Michael, 72669 Unterensingen (DE)
(74) Vertreter: Friz, Oliver

(56) Entgegenhaltungen:
- EP-A- 1 714 734
- DE-A1-102004 044 331
- DE-B3-102004 025 880

## Beschreibung

Die Erfindung betrifft eine Absaugeinrichtung für ein motorisch angetriebenes Handwerkzeuggerät, insbesondere für einen Bohrhammer, mit den Merkmalen des Oberbegriffs des Anspruchs 1. Eine derartige Absaugeinrichtung ist bekannt aus DE 10 2004 025 880 B3.

DE 10 2004 044 331 A1 betrifft einen Aufschiebemechanismus zum Befestigen eines Akkupacks an einem Elektrohandwerkzeuggerät, wobei Unterbrechungen in den Führungsbahnen vorgesehen sind, um den Akkupack zwischen einer Verriegelungsposition und einer Entnahmeposition zu blockieren, um ein Abstürzen zu verhindern.

Eine weitere Absaugeinrichtung für einen Bohrhammer ist beispielsweise vorbeschrieben in US 7,017,680 B2 oder in EP 1 714 732 A1 der Anmelderin.

Das Anbringen oder Aufschieben des Staubauffangbehälters in seine bestimmungsgemäße Montageposition am Gehäusekörper der Absaugeinrichtung gestaltet sich oftmals schwierig. Aufgrund des hohen Schmutzeintrags, und zwar auch von außen, weil die Handwerkzeuggeräte oft in schmutziger und staubiger Umgebung verwendet werden, neigen die zu fügenden Komponenten häufig zum Verklemmen. Jedenfalls lässt sich der Staubauffangbehälter nicht problemlos in seine bestimmungsgemäße Montageposition bringen.

Der vorliegenden Erfindung liegt die Aufgabe zugrunde, die Anbringbarkeit des Staubauffangbehälters am Gehäuse der Absaugeinrichtung zu verbessern. Diese Aufgabe wird durch eine Absaugeinrichtung mit den Merkmalen des Anspruchs 1 gelöst.

Durch die Anbringung von Führungsmitteln am Gehäusekörper und am Staubauffangbehälter wird einerseits erreicht, dass der Staubauffangbehälter beim Aufbringen, Aufsetzen oder Aufschieben auf den Gehäusekörper der Absaugeinrichtung zwangsgeführt wird, so dass er selbstzentrierend seine korrekte Montageposition einnimmt. Die Führungsmittel, die vorliegend im weitesten Sinne zu verstehen sind, weisen hierfür die genannten ersten flächenhaften und oberflächenglatten im wesentlichen in der Fügerichtung erstreckten Führungsbahnabschnitte auf, die zu Beginn, also während einer ersten Phase des Fügens des Staubauffangbehälters an den Gehäusekörper aktiv gleitend und führend miteinander zusammenwirken. Dadurch dass diese Führungsbahnabschnitte oberflächenglatt ausgebildet sind, kommt es weniger zu Verkanten oder zu Verhaken und auch zu keinem "Rattern" beim Aufschieben des Staubauffangbehälters auf den Gehäusekörper. Wenn der Staubauffangbehälter schon ein gewisses Stück auf den Gehäusekörper aufgeschoben ist und hierdurch aufgrund der Führung und Selbstzentrierung schon die bestimmungsgemäße korrekte Ausrichtung erhalten hat, besteht nicht mehr die Gefahr des Verkantens der zu fügenden Komponenten. Gleichwohl wirkt sich der zwischen den Komponenten, insbesondere zwischen den zusammenwirkenden Führungsmitteln haftende Schmutz und Staub zunehmend nachteilig aus. Je spielfreier die Führungsmittel zusammenwirken, um so eher kann Staub und Schmutz eine Verklemmung bewirken, die dann wieder durch Erhöhung des Drucks überwunden werden muss. Um dem entgegenzuwirken, weisen die Führungsmittel weitere Führungsbahnabschnitte auf, welche die oberflächenoffenen Staubaufnahmekavitäten aufweisen. Zwischen den Führungsmitteln auftretender Schmutz kann dann erfindungsgemäß in diese Staubaufnahmekavitäten verdrängt werden, so dass er den Fügevorgang nicht oder zumindest weniger behindert. Diese weiteren Führungsbahnabschnitte mit Oberflächenoffenen Staubaufnahmekavitäten kommen jedoch erst nach der genannten ersten Phase des Aufschiebens zum Tragen.

Nach einer bevorzugten Ausführungsform der Erfindung erstrecken sich die ersten oberflächenglatten Führungsbahnabschnitte in der Aufschieberichtung über wenigstens 10%, insbesondere über wenigstens 20 %, insbesondere über wenigstens 30 %, und weiter insbesondere über 30 - 60 % der Führungslänge der Führungsmittel.

Hieran können sich insbesondere unmittelbar die zweiten Führungsbahnabschnitte mit den genannten Staubaufnahmekavitäten anschließen.

Die Führungsmittel können im einfachsten Fall nut- und federartig ausgebildet sein, oder in ansich beliebiger Weise in der Aufschieberichtung erstreckte Leisten oder Rippen aufweisen, die in ansich beliebiger Weise einen Hintergriff oder Formschluss mit den ihnen zugeordneten Führungsmitteln ausüben. Nach einer weiteren Ausführungsform der Erfindung sind die Führungsmittel derart ausgebildet, dass sie teleskopierend ineinander greifen. Hierunter wird eine Ausführung verstanden, wonach die Führungsmittel in der Aufschieberichtung ineinander greifen, derart, dass ein Führungsmittel in eine von der anderen Komponente gebildete Tasche in der Fügerichtung eingreift.

In Weiterbildung dieses Erfindungsgedankens umfassen die Führungsmittel je einen in der Aufschiebe- oder Fügerichtung erstreckten Wandabschnitt, wobei der eine Wandabschnitt in eine schlitzförmige von dem anderen Wandabschnitt teilweise begrenzte Aufnahme eingreift.

Die genannten oberflächenoffenen Staubaufnahmekavitäten können zumindest grundsätzlich in ansich beliebiger Weise ausgebildet werden, so dass sie geeignet sind, durch die zusammenwirkenden Führungsmittel verdrängten partikelförmigen Schmutz aufzunehmen. Es erweist sich beispielsweise als vorteilhaft, wenn die oberflächenoffenen Staubaufnahmekavitäten kalottenförmig oder nutartig ausgebildet sind. Solchenfalls lässt sich Schmutz sehr effektiv in die Staubaufnahmekavitäten eintragen, und auch das Abreinigen gestaltet sich problemlos. Sofern nutartige Staubaufnahmekavitäten verwendet werden, sollten die Nutflanken im Übergang zu den Führungsbahnabschnitten verrundet ausgebildet sein.

In diesem Zusammenhang erweist es sich auch als vorteilhaft, wenn die Führungsbahnabschnitte zwischen den Staubaufnahmekavitäten einen gekrümmten Verlauf haben.

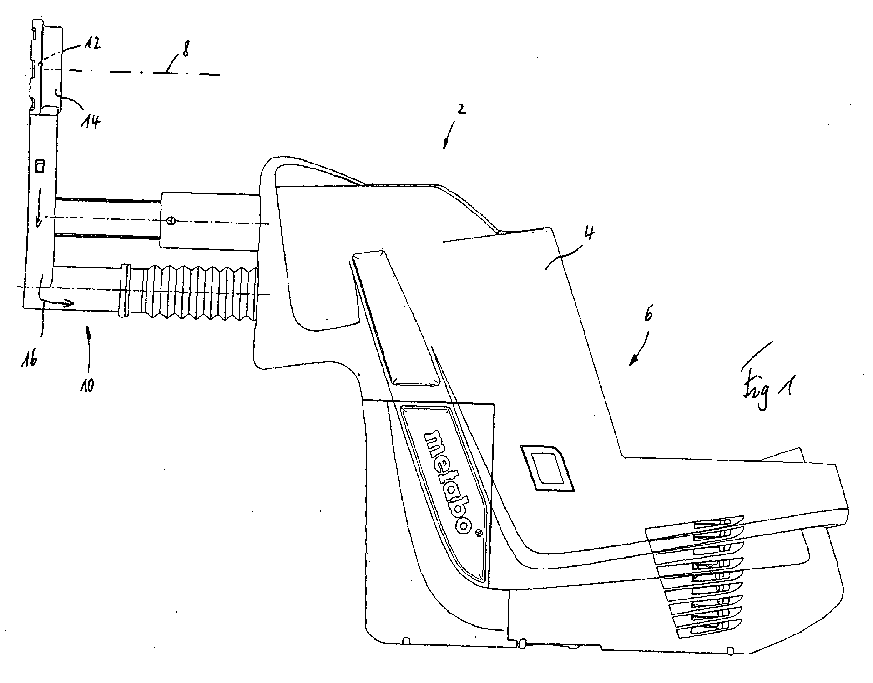

Weitere Merkmale, Einzelheiten und Vorteile der Erfindung ergeben sich aus den beigefügten Schutzansprüchen und aus der zeichnerischen Darstellung und nachfolgenden Beschreibung einer bevorzugten Ausführungsform der erfindungsgemäßen Absaugeinrichtung. In der Zeichnung zeigt
- Figur 1: eine Seitenansicht einer erfindungsgemäßen Absaugeinrichtung (jedoch ohne Elektrohandwerkzeuggerät);
- Figur 2: eine weitere Seitenansicht der Absaugeinrichtung nach Figur 1, teilweise aufgebrochen und
- Figur 3: eine Schnittansicht mit Schnittebene III-III in Figur 2.

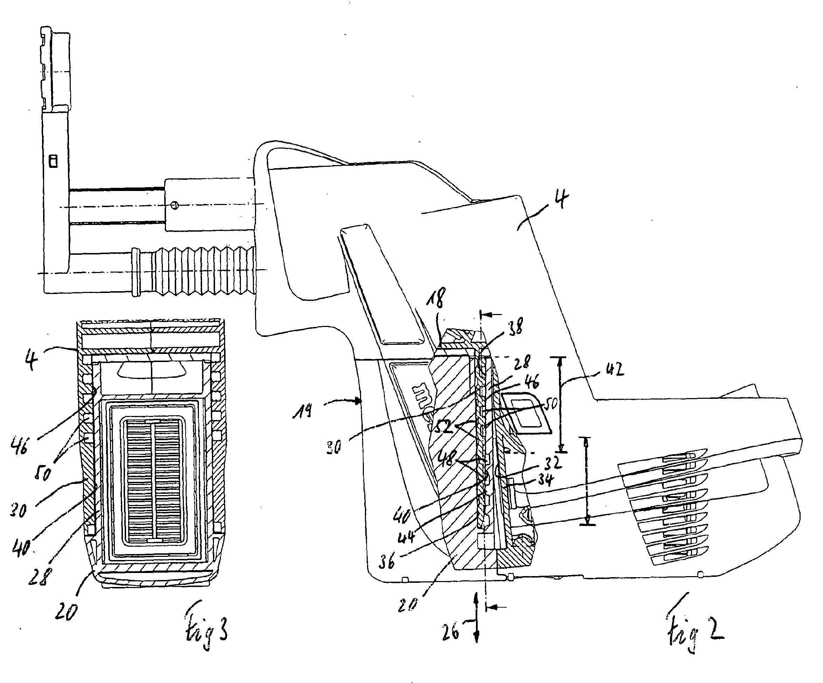

Die Figuren zeigen eine insgesamt mit dem Bezugszeichen 2 bezeichnete Absaugeinrichtung für ein motorisch angetriebenes Handwerkzeuggerät, insbesondere Elektrohandwerkzeuggerät, wie zum Beispiel ein Bohrhammer. Die Absaugeinrichtung umfasst einen Gehäusekörper 4, der mit einem stumpfwinklig ausgebildeten Gehäuseseitenbereich 6 an einen Bohrhammer lösbar, jedoch bei Betrieb des Bohrhammers fixiert, anbringbar ist. Das Werkzeug des Bohrhammers erstreckt sich dann entlang der angedeuteten Achse 8. Die Absaugeinrichtung 2 umfasst eine der jeweiligen Bohrtiefe entsprechend teleskopierbare Staubableitvorrichtung 10. Die Staubableitvorrichtung 10 kommuniziert mit einer Werkzeugansetzstelle 12, wo sie eine sogenannte Saugbrille 14 aufweist. Ausgehend von der Werkzeugansetzstelle 12 und der Saugbrille 14 ist ein Strömungspfad 16 durch die Staubableitvorrichtung 10 hindurch ausgebildet, der über einen Stutzen 18 (s. Figur 2) in das Innere einer Staubsammelvorrichtung 19 in Form eines Staubauffangbehälters 20 mündet. Der Staubauffangbehälter 20 und damit die Staubableitvorrichtung 10 sind von einer motorischen Unterdruck erzeugenden Vorrichtung beaufschlagbar, die sich im dargestellten Fall hinter einer Gehäusewandung im Bereich des Gehäusekörpers 4 verbirgt. Auf diese Weise wird ein Saugluftstrom, ausgehend von der Werkzeugansetzstelle 12, durch die Staubableitvorrichtung 10 hindurch zum Staubauffangbehälter 20 und von dort in Richtung Unterdruck erzeugender Vorrichtung erzeugt. Bohrstaub sowie partikulärer Schmutz werden im Staubauffangbehälter 20 abgeschieden. Darin ist zusätzlich ein Filtermittel vorgesehen, durch welches der Saugluftstrom hindurchtreten muss.

Der Staubauffangbehälter 20 ist in Richtung des Doppelpfeils 26, der eine Aufschiebe- oder Fügerichtung bezeichnet, an den Gehäusekörper 4 ansetzbar, bzw. von dem Gehäusekörper 4 abnehmbar. Zwischen Gehäusekörper 4 und Staubauffangbehälter 20 sind Führungsmittel 28, 30 vorgesehen, durch welche der Staubauffangbehälter 20 beim Aufschieben auf den Gehäusekörper 4 seine bestimmungsgemäße Montageposition einnimmt.

Das Führungsmittel 28 ist ein vorzugsweise einstückig mit dem Staubauffangbehälter 20 ausgebildeter Wandabschnitt, der in eine schlitzförmige Aufnahme 32 eingreift, die von einer schräg verlaufenden Wandung 34 des Gehäusekörpers 4 und von dem anderen Führungsmittel 30 des Gehäusekörpers 4 gebildet ist. Gleichermaßen greift das Führungsmittel 30 des Gehäusekörpers 4 in eine schmale schlitzförmige Aufnahme 36 ein, die von dem Führungsmittel 28 des Staubauffangbehälters und einer Wandung des Staubaufnahmebehälters 20 gebildet ist. Die Führungsmittel 28, 30 sind also teleskopierend ineinander schiebbar.

Beide Führungsmittel 28, 30 weisen zu Beginn des Aufschiebevorgangs zusammenwirkende flächenhafte und oberflächenglatte im wesentlichen in Fügerichtung 26 erstreckte erste Führungsbahnabschnitte 38 bzw. 40 auf. Wenn der Staubaufnahmebehälter 20 ausgehend vom abgenommenen Zustand in Aufschieberichtung 26 auf den Gehäusekörper 4 der Absaugeinrichtung 2 aufgeschoben wird, dann gelangen diese ersten Führungsbahnabschnitte 38 und 40 der Führungsmittel 28, 30 in Kontakt und bewirken eine selbstzentrierende Führung des Staubauffangbehälters 20. Da nur obeflächenglatte Führungsbahnabschnitte 38, 40 miteinander in Kontakt kommen, gleiten die Komponenten satt und widerstandslos gegeneinander.

Im dargestellten Fall erstreckt sich der erste oberflächenglatte Führungsbahnabschnitt 38 über ca. 55% der Führungslänge. Ebenso verhält es sich bei dem Führungsbahnabschnitt 40 des Führungsmittels 30.

Anschließend an den jeweiligen ersten Führungsbahnabschnitt 38, 40 ist ein zweiter Führungsbahnabschnitt 44, 46 vorgesehen, von denen im beispielhaft dargestellten Fall jeder Staubaufnahmekavitäten 48, 50 aufweist.

Man erkennt, dass die Staubaufnahmekavitäten 48 nutförmig ausgebildet sind. Ihre Nutflanken gehen verrundet in die tragenden Bereiche der zweiten Führungsbahnabschnitte 44, 46 über. Das Führungsmittel 30 des Gehäusekörpers 4 weist außerdem eine Anzahl von wenig tiefen kalottenförmigen Staubaufnahmekavitäten 52 auf.

Die Schnittansicht nach Figur 3 zeigt die Ausbildung von weiteren Führungsmitteln 28, 30 mit oberflächenglatten Führungsbahnabschnitten und Führungsbahnabschnitten mit Staubaufnahmekavitäten in denjenigen Ebenen, die in Figur 2 nicht ersichtlich sind. Es wurden hier entsprechende Bezugszeichen verwendet.

## Patentansprüche

1. Absaugeinrichtung (2) für ein motorisch angetriebenes Handwerkzeuggerät, insbesondere für einen Bohrhammer, mit einem Gehäusekörper (4) und mit Befestigungsmitteln zum lösbaren Fixieren des Gehäusekörpers (4) der Absaugeinrichtung an dem Handwerkzeuggerät, wobei die Absaugeinrichtung eine mit einer Werkzeugansetzstelle (12) kommunizierende Staubableitvorrichtung (10) und eine Staubsammelvorrichtung (19) umfasst, wobei die Staubsammelvorrichtung (19) einen vom Gehäusekörper (4) lösbaren, Filtermittel enthaltenden Staubauffangbehälter (20) umfasst, in den die Staubableitvorrichtung (10) einmündet und der von einer Unterdruck erzeugenden Vorrichtung beaufschlagbar ist, wobei der Staubauffangbehälter (20) in einer Fügerichtung (26) auf den Gehäusekörper (4) aufschiebbar ist und dabei selbstzentrierend in seine bestimmungsgemäße Montageposition am Gehäusekörper (4) bringbar ist und dass hierfür am Gehäusekörper (4) und am Staubauffangbehälter (20) zusammenwirkende Führungsmittel (28, 30) vorgesehen sind, dass die Führungsmittel (28, 30) zu Beginn des Aufschiebevorgangs zusammenwirkende flächenhafte und oberflächenglatte im wesentlichen in der Fügerichtung (26) erstreckte erste Führungsbahnabschnitte (38, 40) aufweisen, **dadurch gekennzeichnet, dass** zumindest eines der Führungsmittel (28, 30) daran anschließend einen zweiten Führungsbahnabschnitt (44, 46) mit oberflächenoffenen Staubaufnahmekavitäten (48, 50) aufweist.

2. Absaugeinrichtung nach Anspruch 1, **dadurch gekennzeichnet, dass** die ersten Führungsbahnabschnitte (38, 40) sich in der Aufschieberichtung über wenigstens 10 %, insbesondere über wenigstens 20 %, insbesondere über wenigstens 30 %, und weiter insbesondere über 30 - 60 % der Führungslänge der Führungsmittel (28, 30) erstrecken.

3. Absaugeinrichtung nach Anspruch 1 oder 2, **dadurch gekennzeichnet, dass** die Führungsmittel (28, 30) teleskopierend ineinander greifen.

4. Absaugeinrichtung nach Anspruch 3, **dadurch gekennzeichnet, dass** die Führungsmittel (28, 30) je einen in der Fügerichtung (26) erstreckten Wandabschnitt umfassen, wobei der eine Wandabschnitt in eine schlitzförmige von dem anderen Wandabschnitt teilweise begrenzte Aufnahme (32, 36) eingreift.

5. Absaugeinrichtung nach einem der vorstehenden Ansprüche, **dadurch gekennzeichnet, dass** oberflächenoffenen Staubaufnahmekavitäten (48, 50. 52) kalottenförmig oder nutartig ausgebildet sind.

6. Absaugeinrichtung nach einem der vorstehenden Ansprüche, **dadurch gekennzeichnet, dass** die zweiten Führungsbahnabschnitte (44, 46) in der Fügerichtung (26) zwischen den Staubaufnahmekavitäten (48, 50) einen gekrümmten Verlauf haben.

## Claims

1. Suction device (2) for a motor-driven hand tool, in particular for a hammer drill, comprising a housing body (4) and attachment means for releasably fixing the housing body (4) of the suction device to the hand tool, wherein the suction device comprises a dust transport device (10), which communicates with a point of action (12) of the tool, and a dust collection device (19), wherein the dust collection device (19) comprises a dust catching container (20) which contains filter means and which can be detached from the housing body (4), into which container the dust transport device (10) opens and which can be acted upon by a vacuum-generating device, wherein the dust catching container (20) can be pushed onto the housing body (4) in a joining direction (26) and in the process can be brought into its intended mounting position on the housing body (4) in a self-centring manner, and wherein cooperating guide means (28, 30) are provided for this purpose on the housing body (4) and on the dust catching container (20), wherein the guide means (28, 30) at the start of the pushing-on operation have cooperating flat first guide path portions (38, 40) which have a smooth surface and extend essentially in the joining direction (26), **characterised in that** at least one of the guide means (28, 30) has, adjoining said first guide path portion, a second guide path portion (44, 46) with dust receiving cavities (48, 50) which are open on the surface.

2. Suction device according to claim 1, **characterised in that** the first guide path portions (38, 40) extend in the push-on direction over at least 10%, in particular over at least 20%, in particular over at least 30% and more particularly over 30-60% of the guide length of the guide means (28, 30).

3. Suction device according to claim 1 or 2, **characterised in that** the guide means (28, 30) engage in one another in a telescopic manner.

4. Suction device according to claim 3, **characterised in that** the guide means (28, 30) in each case comprise a wall portion extending in the joining direction (26), wherein one wall portion engages in a slot-shaped opening (32, 36) which is partially delimited by the other wall portion.

5. Suction device according to one of the preceding claims, **characterised in that** dust receiving cavities (48, 50, 52) which are open on the surface are designed in a spherical or groove-like manner.

6. Suction device according to one of the preceding claims, **characterised in that** the second guide path portions (44, 46) have a curved profile in the joining direction (26) between the dust receiving cavities (48, 50).

## Revendications

1. Dispositif d'aspiration (2) pour un outil portatif actionné par un moteur, en particulier pour un marteau perforateur, comportant un carter (4) et des moyens de fixation pour la fixation amovible du carter (4) du dispositif d'aspiration sur l'outil portatif, ledit dispositif d'aspiration comportant un dispositif d'évacuation de la poussière (10), communiquant avec une zone d'attache (12) sur l'outil, et un dispositif de collecte des poussières (19), ledit dispositif de collecte des poussières (19) comportant un collecteur de poussières (20), qui est fixé de manière amovible sur le carter (4) et contient un moyen de filtrage et dans lequel débouche le dispositif d'évacuation des poussières (10) et qui peut être sollicité par un dispositif générant une dépression, sachant que le collecteur de poussières (20) peut être monté sur le carter (4) par coulissement dans une direction d'assemblage (26) et, à cette occasion, peut être amené par auto-centrage dans sa position de montage, conforme à sa destination, sur le carter (4) et que, pour ce faire, il est prévu sur le carter (4) et sur le collecteur de poussières (20) des moyens de guidage (28, 30) coopérant entre eux, lesdits moyens de guidage (28, 30) comportant des premiers tronçons de voie de guidage (38, 40) plans et à surface lisse, qui s'étendent sensiblement dans la direction d'assemblage (26) et qui coopèrent entre eux au début du processus de montage par coulissement, **caractérisé en ce qu'**au moins un des moyens de guidage (28, 30) comporte un deuxième tronçon de voie de guidage (44, 46), adjacent auxdits premiers tronçons de voie de guidage et muni de cavités de réception de poussières (48, 50) ouvertes en surface.

2. Dispositif d'aspiration selon la revendication 1, **caractérisé en ce que** les premiers tronçons de voie de guidage (38, 40) s'étendent dans la direction de coulissement sur au moins 10 %, en particulier sur au moins 20 %, en particulier sur au moins 30 % et encore mieux sur 30 à 60 % de la longueur de guidage des moyens de guidage (28, 30).

3. Dispositif d'aspiration selon la revendication 1 ou 2, **caractérisé en ce que** les moyens de guidage (28, 30) s'engagent l'un dans l'autre de manière télescopique.

4. Dispositif d'aspiration selon la revendication 3, **caractérisé en ce que** les moyens de guidage (28, 30) comportent chacun une partie de paroi qui s'étend dans la direction d'assemblage (26), sachant que l'une des parties de paroi s'engage dans un logement (32, 36) en forme de fente, délimité partiellement par l'autre partie de paroi.

5. Dispositif d'aspiration selon l'une quelconque des revendications précédentes, **caractérisé en ce que** des cavités de réception de poussières (48, 50, 52) ouvertes en surface sont réalisées en forme de calotte ou en forme de rainure.

6. Dispositif d'aspiration selon l'une quelconque des revendications précédentes, **caractérisé en ce que** les deuxièmes tronçons de voie de guidage (44, 46) ont un tracé courbe dans la direction d'assemblage (26) entre les cavités de réception de poussières (48, 50).
